# EUROPÄISCHE PATENTSCHRIFT

(11) **EP 2 110 362 B1**
(45) Veröffentlichungstag und Bekanntmachung des Hinweises auf die Patenterteilung: **01.06.2016**
(21) Anmeldenummer: 09005142.6
(22) Anmeldetag: 08.04.2009
(51) Int. Cl.: C02F 1/42, C02F 1/00, C02F 5/00

(54) **Vorrichtung zum Überwachen von Weichwasser**
Device for monitoring soft water
Dispositif de surveillance d'eau douce

(30) Priorität: 18.04.2008 DE 102008020905
(43) Veröffentlichungstag der Anmeldung: 21.10.2009
(73) Patentinhaber: Karl Spiegl GmbH & Co., 71106 Magstadt (DE)
(72) Erfinder: Spiegl, Peter, 71134 Aidlingen 2 (DE)
(74) Vertreter: DREISS Patentanwälte PartG mbB

(56) Entgegenhaltungen:
- DE-A1- 3 528 617
- US-A- 4 332 678
- US-B1- 6 357 477

## Beschreibung

Die Erfindung betrifft eine, mit einer Härtemesszelle, einer vom Hauptstrom abzweigenden und zur Härtemesszelle führenden ersten Nebenstromleitung und einer von der Härtemesszelle wegführenden und in den Hauptstrom einmündenden zweiten Nebenstromleitung, wobei die beiden Nebenstromleitungen und die Härtemesszelle an ein Mehrwegeventil angeschlossen sind.

Die Weichwasserüberwachung wird benutzt, um einen Weichwasserstrom auf seine Wasserhärte zu überwachen und Weichwasserverbraucher vor zu hoher Wasserhärte zu schützen. Die wichtigsten Anwendungen sind Dampfkessel und Umkehrosmoseanlagen, Verdampfer und Destillationsanlagen. Das System ermöglicht eine kontinuierliche Überwachung.

Bei der Weichwasserüberwachung wird ein Teilstrom des Weichwassers durch eine Härtemesszelle geleitet. Wird die Härtemesszelle von Hartwasser durchströmt, erschöpft sich die Messfüllung in der Härtemesszelle und verändert ihr Volumen und schrumpft. Dabei wird ein elektrisches Signal ausgelöst und eine Steuerung meldet einen Alarm, der zum Abschalten von Geräten benutzt werden kann.

Ist die Weichwasserversorgung wieder hergestellt, muss die Härtemesszelle regeneriert werden. Dazu werden an der Messstrecke eingebaute Ventile betätigt und dadurch die Messstrecke vom Hauptstrom abgetrennt. Es wird etwas Sole in die Härtemesszelle eingespritzt. Anschließend wird die Härtemesszelle mit Weichwasser wieder ausgewaschen. Insgesamt dauert dieser Vorgang etwa 3 bis 5 Minuten. Härtemesszellen sind z.B. Aus der DE 34 06 724 C2 und aus der EP 0 016 408 A1 bekannt. Dieser Vorgang wird manuell durchgeführt, was nicht nur umständlich sondern auch zeitraubend ist.

Aus der US 4,332,678 A ist eine Anlage zum Enthärten von Wasser bekannt, bei welcher das zu behandelnde Wasser ein Mehrwegeventil durchströmt. Dabei nimmt das Mehrwegeventil seine Normalstellung ein. Ist der Enthärter erschöpft, so wird er mit Salz regeneriert, wofür das Mehrwegeventil in die Regenerationsstellung umgeschaltet wird. Das Mehrwegeventil wird weiterhin vom Wasser durchströmt. Nach der Generation wird das Mehrwegeventil wieder in die Normalstellung umgestellt. Als nacheilig wird bei dieser Anlage angesehen, dass beim Umstellen von der Regenerationsstellung in die Normalstellung die noch im Mehrwegeventil enthaltene Salzlösung in das Wasser gelangt und mit diesem ausgetragen wird.

Der Erfindung liegt die Aufgabe zugrunde, eine Anlage der eingangs genannten Artbereit zu stellen, mit welcher auf einfache Weise vermieden wird, dass Regenerationsmittel in den Wasserkreislauf gelangt.

Diese Aufgabe wird erfindungsgemäß dadurch gelöst, dass das Mehrwegeventil eine Stellung für den Normalbetrieb, eine Stellung für den Regenerationsbetrieb und eine Stellung für einen Spülvorgang aufweist, wobei während des Regenerationsbetriebs und des Spülvorganges das das Mehrwegeventil durchströmende Fluid einer Abwasserleitung zugeführt wird.

Bei der erfindungsgemäßen Vorrichtung muss nicht mehr manuell jede Nebenstromleitung einzeln vom Hauptstrom entkoppelt werden, wenn die Härtemesszelle regeneriert werden muss, sondern es erfolgt eine gemeinsame Trennung der Nebenstromleitungen vom Hauptstrom, was wesentlich schneller durchführbar ist. Dieses Entkoppeln ist deshalb besonders wichtig, da die für das Regenieren notwendige Sole nicht in den Hauptstrom gelangen darf. Das Abkoppeln und das Zuschalten der Nebenstromleitungen und der Härtemesszelle nach dem Spülvorgang erfolgt erfindungsgemäß auf einfache Weise mittels eines Mehrwegventils. Manuelles Eingreifen erübrigt sich vollständig.

Ist dieses Mehrwegventil an einen Antrieb angeschlossen, kann durch gezielte Ansteuerung dieses Antriebs die Zu- und Abschaltung der Nebenstromleitungen ferngesteuert erfolgen, das heißt dass hierfür keine manuelle Betätigung der Anlage erforderlich ist.

Bei einer Weiterbildung ist vorgesehen, dass das Mehrwegeventil ein 7/3-Ventil mit sieben Anschlüssen und drei Schaltstellungen ist. An zwei Anschlüssen dieses Mehrwegeventils sind die beiden Nebenstromleitungen angeschlossen, wobei zwei weitere Anschlüsse mit dem Zulauf und dem Ablauf der Härtemesszelle belegt sind.

Bei der Erfindung ist vorgesehen, dass an das Mehrwegeventil zusätzlich eine Wasserstrahlpumpe angeschlossen ist. Dabei sind zwei Anschlüsse des Mehrwegeventils mit dem Druckanschluss und dem Sauganschluss der Wasserstrahlpumpe verbunden. Der Ausgang der Wasserstrahlpumpe führt direkt in eine Abwasserleitung.

Die Erfindung sieht vor, dass das Mehrwegeventil mit einem Soletank verbunden ist. Über den siebten Anschluss des Mehrwegeventils gelangt die zum Regenerieren erforderliche Sole in den Kreislauf und kann bei geeigneter Schaltung des Mehrwegeventils der Härtemesszelle zugeführt werden.

Um die Durchströmung der Härtemesszelle mit einem Nebenstrom sicherzustellen, ist erfindungsgemäß im Hauptstrom und zwischen den Abzweigungen der Nebenstromleitungen ein Durchflussregler vorgesehen.

Mittels des Durchflussreglers wird eine Druckdifferenz für den Durchfluss des Weichwassers durch die Messstrecke und somit durch die Härtemesszelle erzeugt. Außerdem kann über den Durchflussregler der abgezweigte Massenstrom geregelt werden.

Für den automatischen Betrieb der erfindungsgemäßen Vorrichtung ist die Härtemesszelle mit einer Steuerung versehen, über welche das Mehrwegeventil angesteuert wird. Detektiert die Härtemesszelle einen erschöpften Sensor, dann wird über die Steuerung das Mehrwegeventil derart angesteuert, dass die Messeinrichtung regeneriert und anschließend gespült wird. Manuelles Eingreifen erübrigt sich vollständig. Die Steuerung enthält nicht nur ein oder mehrere Zeitglieder sondern ist auch mit einer Ausgabe für ein akustisches, optisches und/oder elektrisches Alarmsignal ausgestattet.

Weitere Vorteile, Merkmale und Einzelheiten der Erfindung ergeben sich aus den Unteransprüchen sowie der nachfolgenden Beschreibung, in der unter Bezugnahme auf die Zeichnung ein besonders bevorzugtes Ausführungsbeispiel im Einzelnen beschrieben ist. Dabei können die in der Zeichnung dargestellten sowie in den Ansprüchen und in der Beschreibung erwähnten Merkmale jeweils einzeln für sich oder in beliebiger Kombination erfindungswesentlich sein.

In der Zeichnung zeigen:
- Figur 1: eine schematische Darstellung einer Messstrecke im Normalbetrieb;
- Figur 2: eine schematische Darstellung der Messstrecke bei der Regeneration; und
- Figur 3: eine schematische Darstellung der Messstrecke während des Spülvorganges.

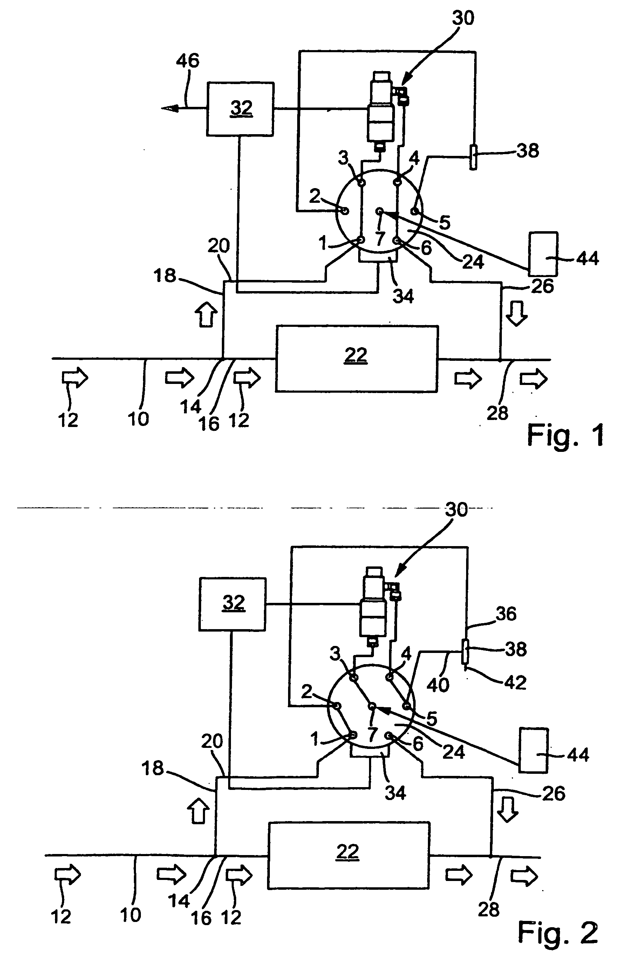

In der Figur 1 ist mit dem Bezugszeichen 10 eine Wasserleitung für Weichwasser bezeichnet und mit den Pfeilen 12 ist die Strömungsrichtung des Weichwassers angedeutet. An einem Abzweig 14 teilt sich der Weichwasserstrom in einen Hauptstrom 16 und einen Nebenstrom 18 in einer Nebenstromleitung 20 auf. Im Hauptstrom 16 befindet sich ein Durchflussregler 22, mit welchem eine Druckdifferenz für den Durchfluss des Nebenstroms 18 erzeugt wird.

In der Figur 1 ist außerdem ein Mehrwegeventil 24 erkennbar, welches als 7/3-Ventil ausgebildet ist. Die Anschlüsse des Mehrwegeventils 24 sind mit 1 bis 7 bezeichnet, wobei die drei Stellungen des Mehrwegeventils 24 in den Figuren 1 bis 3 dargestellt sind. An den Anschluss 1 ist die Nebenstromleitung 20 herangeführt, wobei vom Anschluss 6 eine zweite Nebenstromleitung 26 wegführt und nach dem Durchflussregler 22 in den Hauptstrom 16 einmündet, so dass ein abgehender zusammengeführter Weichwasserstrom 28 gebildet wird.

Außerdem ist eine Härtemesszelle 30 erkennbar, deren Eingang am Anschluss 3 und deren Ausgang am Anschluss 4 des Mehrwegeventils 24 liegt. Im in der Figur 1 dargestellten Normalbetrieb sind die Anschlüsse 1 und 3 und die Anschlüsse 4 und 6 des Mehrwegeventils 24 miteinander verbunden, so dass die Härtemesszelle 30 vom Nebenstrom 18 durchströmt wird. Dabei wird die Härte des Weichwassers gemessen.

Wird die Härtemesszelle 30 von Hartwasser durchströmt, dann wird von der Härtemesszelle 30 an eine nur schematisch dargestellte Steuerung 32 ein Signal abgegeben, so dass geeignete Maßnahmen ergriffen werden können, z.B. ein Alarm ausgelöst oder eine Anlage abgeschaltet wird. Zur Regenerierung und den zukünftigen Einsatz der Härtemesszelle 30 steuert die Steuerung 32 einen Antrieb 34 zur Verstellung des Mehrwegeventils 24 an.

Über den Antrieb 34 wird das Mehrwegeventil 24 in eine Stellung zum Regenerieren der Härtemesszelle 30 verstellt. Dabei werden die Anschlüsse 1 und 2, die Anschlüsse 3 und 7 sowie die Anschlüsse 4 und 5 miteinander verbunden. Am Anschluss 2 liegt der Druckanschluss 36 einer Wasserstrahlpumpe 38, wobei der Anschluss 5 mit dem Sauganschluss 40 der Wasserstrahlpumpe 38 verbunden ist. Der Ausgang 42 der Wasserstrahlpumpe 38 führt in eine nicht dargestellte Abwasserleitung. Schließlich ist noch der Anschluss 7 mit einem Soletank 44 verbunden.

In dieser Stellung des Mehrwegeventils 24 treibt der Nebenstrom 18 die Wasserstrahlpumpe 38 an, so dass am Sauganschluss 40 ein Unterdruck erzeugt wird. Dieser Unterdruck bewirkt, dass die Härtemesszelle 30 über die Anschlüsse 7 und 3 des Mehrwegeventils 24 Sole aus dem Soletank 44 ansaugt, so dass der in der Härtemesszelle 30 sich befindende Sensor regeneriert wird. Diese Sole wird dann über die Anschlüsse 4 und 5 des Mehrwegeventils 24 abgesaugt und über den Ausgang 24 der Wasserstrahlpumpe 38 zusammen mit dem Nebenstrom 18 der Abwasserleitung zugeführt. Die Steuerung 32 steuert diesen Vorgang in einer vorgebbaren Zeit an und schaltet nach Ablauf dieser Zeit das Mehrwegeventil 24 in eine Spülstellung um.

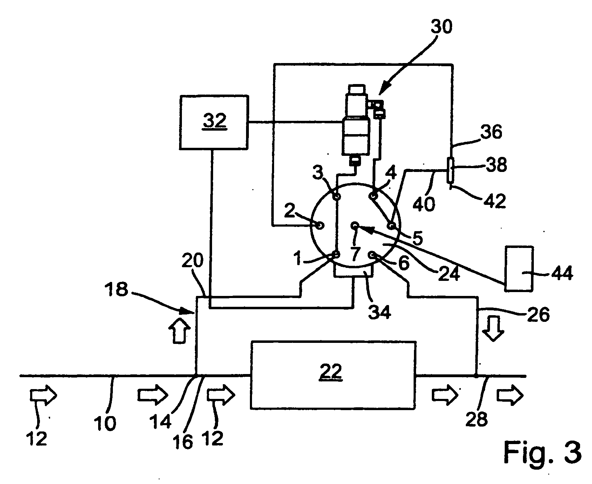

In der Figur 3 ist das Mehrwegeventil 24 in dieser Stellung zum Spülen der Härtemesszelle 30 dargestellt, wobei in dieser Spülstellung die Anschlüsse 1 und 3 und die Anschlüsse 4 und 5 miteinander verbunden sind. Dies bedeutet, dass der Nebenstrom 18 über die Anschlüsse 1 und 3 der Härtemesszelle 30 zugeleitet wird, so dass die Härtemesszelle 30 von diesem Nebenstrom 18 durchströmt und dabei die gesamte in der Härtemesszelle 30 sich befindende Sole über die Anschlüsse 4 und 5 des Mehrwegeventils 24 dem Sauganschluss 40 der Wasserstrahlpumpe 38, die in dieser Stellung des Mehrwegeventils 24 nicht in Betrieb ist, zugeleitet wird, so dass das Fluid über den Ausgang 42 der Wasserstrahlpumpe 38 der Abwasserleitung zugeleitet werden kann. Nach Ablauf einer zweiten vorgebbaren Zeitspanne wird über die Steuerung 32 der Antrieb 34 betätigt und das Mehrwegeventil 24 in die in der Figur 1 dargestellte Stellung für den Normalbetrieb der Härtemesszelle 30 umgestellt. Das Weichwasser kann nunmehr wieder überwacht werden.

Es ist deutlich erkennbar, dass die erfindungsgemäße Vorrichtung vollautomatisch arbeitet und bei der Detektion von Hartwasser über die Steuerung 32 zum Beispiel ein Alarmsignal 46 in geeigneter Weise, zum Beispiel als optisches, akustisches oder elektrisches Signal, abgibt. Es können vollautomatisch geeignete Maßnahmen ergriffen werden. Auch wenn der Sensor routinemäßig regeneriert werden muss, kann dies über die Steuerung 32 erfolgen.

## Patentansprüche

1. Vorrichtung zum Überwachen von in einer Wasserleitung (10) geführtem Weichwasser, mit einer zu einem Hauptstrom (16) parallel geschalteten Härtemesszelle (30), einer vom Hauptstrom (16) abzweigenden und zur Härtemesszelle (30) führenden ersten Nebenstromleitung (20) und einer von der Härtemesszelle (30) wegführenden und in den Hauptstrom (16) einmündenden zweiten Nebenstromleitung (26), wobei die beiden Nebenstromleitungen (20, 26) und die Härtemesszelle (30) an ein Mehrwegeventil (24) angeschlossen sind, wobei das Mehrwegeventil (24) mit einem Soletank (44) verbunden ist, wobei das Mehrwegeventil (24) eine Stellung für einen Normalbetrieb und eine Stellung für einen Regenerationsbetrieb aufweist, wobei in der Stellung des Mehrwegeventils (24) für den Normalbetrieb die Härtemesszelle (30) vom Nebenstrom (18) über die zwei Nebenstromleitungen (20, 26) durchströmbar ist, **dadurch gekennzeichnet, dass** das Mehrwegeventil (24) eine Stellung für einen Spülvorgang aufweist, dass an das Mehrwegeventil (24) eine Wasserstrahlpumpe (38) angeschlossen ist, dass ein Auslass (42) der Wasserstrahlpumpe (38) mit einer Abwasserleitung verbunden ist, dass in der Stellung des Mehrwegeventils (24) für den Regenerationsbetrieb die erste Nebenstromleitung (20) mit einem Druckanschluss (36) der Wasserstrahlpumpe (38), ein Sauganschluss (40) der Wasserstrahlpumpe (38) mit der Härtemesszelle (30) und die Härtemesszelle (30) mit dem Soletank (44) verbindbar ist, so dass durch den Nebenstrom (18) die Wasserstrahlpumpe (38) antreibbar ist, am Sauganschluss (40) ein Unterdruck erzeugbar ist, Sole aus dem Soletank (44) ansaugbar ist und die Sole über einen Ausgang (24) der Wasserstrahlpumpe (38) zusammen mit dem Nebenstrom (18) der Abwasserleitung zuführbar ist, dass in der Stellung des Mehrwegeventils (24) für den Spülvorgang der Nebenstrom (18) der Härtemesszelle (30) zu einer Durchströmung zuleitbar, sich in der Härtemesszelle (30) befindende Sole dem Sauganschluss (40) der Wasserstrahlpumpe (38) zuleitbar, und die Sole über den Ausgang (42) der Wasserstrahlpumpe (38) der Abwasserleitung zuleitbar ist.

2. Vorrichtung nach Anspruch 1, **dadurch gekennzeichnet, dass** das Mehrwegeventil (24) ein 7/3-Ventil mit sieben Anschlüssen (1 bis 7) und drei Schaltstellungen ist.

3. Vorrichtung nach einem der vorhergehenden Ansprüche, **dadurch gekennzeichnet, dass** im Hauptstrom (16) und zwischen den Abzweigungen (14) der Nebenstromleitungen (20, 26) ein Durchflussregler (22) vorgesehen ist.

4. Vorrichtung nach einem der vorhergehenden Ansprüche, **dadurch gekennzeichnet, dass** die Härtemesszelle (30) mit einer Steuerung (32) verbunden ist, über welche das Mehrwegeventil (24) angesteuert wird.

5. Vorrichtung nach Anspruch 4, **dadurch gekennzeichnet, dass** die Steuerung (32) einen das Mehrwegeventil (24) ansteuernden Antrieb (34) antreibt.

## Claims

1. A device for monitoring soft water carried in a water line (10), having a hardness sensor cell (30) connected parallel to a main flow (16), a first bypass flow line (20) branching off from the main flow (16) and leading to the hardness sensor cell (30), and a second bypass flow line (26) leading away from the hardness sensor cell (30) and discharging into the main flow (16), wherein the two bypass flow lines (20, 26) and the hardness sensor cell (30) are connected to a multi-way valve (24), and the multi-way valve (24) communicates with a brine tank (44), and the multi-way valve (24) has one position for normal operation and one position for regeneration operation, and in the position of the multi-way valve (24) for normal operation the bypass flow (18) can flow through the hardness sensor cell (30) via the two bypass flow lines (20, 26), **characterized in that** the multi-way valve (24) has a position for a scavenging operation; that a water jet pump (38) is connected to the multi-way valve (24); that an outlet (42) of the water jet pump (38) communicates with a wastewater line; that in the position of the multi-way valve (24) for regeneration operation the first bypass flow line (20) can be made to communicate with a pressure connection (36) of the water jet pump (38), a suction connection (40) of the water jet pump (38) can be made to communicate with the hardness sensor cell (30), and the hardness sensor cell (30) can be made to communicate with the brine tank (44), so that the water jet pump (38) can be driven by means of the bypass flow (18), a negative pressure can be generated at the suction connection (40), and the brine can be delivered together with the bypass flow (18) to the wastewater line via an outlet (24) of the water jet pump (38); that in the position of the multi-way valve (24) for the scavenging operation, the bypass flow (18) of the hardness sensor cell (30) can be directed to a through flow, brine located in the hardness sensor cell (30) can be directed to the suction connection (40) of the water jet pump (38), and the brine can be directed to the wastewater line via the outlet (42) of the water jet pump (38).

2. The device of claim n1, **characterized in that** the multi-way valve (24) is a 7/3-way valve having seven connections (1 through 7) and three switching positions.

3. The device of one of the foregoing claims, **characterized in that** a flow regulator (22) is provided in the main flow (16) and between the branches (14) of the bypass flow lines (20, 26).

4. The device of one of the foregoing claims, **characterized in that** the hardness sensor cell (30) communicates with a controller (32), by way of which the multi-way valve (24) is triggered.

5. The device of claim 4, **characterized in that** the controller (32) drives a drive mechanism (34) that triggers the multi-way valve (24).

## Revendications

1. Dispositif de surveillance d'eau douce parcourant une conduite d'eau (10), comprenant une cellule de mesure de dureté (30) montée en parallèle à un courant principal (16), une première conduite de courant secondaire (20) qui est en dérivation du courant principal (16) et qui mène vers ladite cellule de mesure de dureté (30), ainsi qu'une deuxième conduite de courant secondaire (26) qui mène dans la direction opposée à la cellule de mesure de dureté (30) et débouche dans le courant principal (16), les deux conduites de courant secondaire (20, 26) et la cellule de mesure de dureté (30) étant connectées à une vanne à plusieurs voies (24), ladite vanne à plusieurs voies (24) étant reliée à un réservoir de saumure (44), ladite vanne à plusieurs voies (24) présentant une position pour un fonctionnement normal et une position pour un fonctionnement de régénération, dans lequel, dans la position de la vanne à plusieurs voies (24) pour le fonctionnement normal, la cellule de mesure de dureté (30) peut être parcourue par le courant secondaire (18) via les deux conduites de courant secondaire (20, 26), **caractérisé par le fait que** ladite vanne à plusieurs voies (24) présente une position pour une opération de rinçage, qu'une pompe à jet d'eau (38) est raccordée à la vanne à plusieurs voies (24), qu'une sortie (42) de ladite pompe à jet d'eau (38) est reliée à une conduite des eaux usées, que, dans la position de la vanne à plusieurs voies (24) pour le fonctionnement de régénération, la première conduite de courant secondaire (20) peut être reliée à un raccord de refoulement (36) de la pompe à jet d'eau (38), un raccord d'aspiration (40) de la pompe à jet d'eau (38) peut être relié à la cellule de mesure de dureté (30) et la cellule de mesure de dureté (30) peut être reliée audit réservoir de saumure (44), de sorte que la pompe à jet d'eau (38) est entraînable par le courant secondaire (18), qu'une dépression peut être produite sur le raccord d'aspiration (40), que de la saumure peut être aspirée du réservoir de saumure (44) et que la saumure peut être amenée via une sortie (24) de la pompe à jet d'eau (38), conjointement avec le courant secondaire (18), à ladite conduite des eaux usées, que, dans la position de la vanne à plusieurs voies (24) pour l'opération de rinçage, le courant secondaire (18) peut être amené à la cellule de mesure de dureté (30) pour traverser celle-ci, que de la saumure se trouvant dans la cellule de mesure de dureté (30) peut être amenée au raccord d'aspiration (40) de la pompe à jet d'eau (38) et que la saumure peut être amenée via la sortie (42) de la pompe à jet d'eau (38) à ladite conduite des eaux usées.

2. Dispositif selon la revendication 1, **caractérisé par le fait que** ladite vanne à plusieurs voies (24) est une vanne à 7/3 ayant sept raccords (1 à 7) et trois positions de commutation.

3. Dispositif selon l'une quelconque des revendications précédentes, **caractérisé par le fait qu'**un régulateur de débit (22) est prévu dans le courant principal (16) et entre les dérivations (14) des conduites de courant secondaire (20, 26).

4. Dispositif selon l'une quelconque des revendications précédentes, **caractérisé par le fait que** ladite cellule de mesure de dureté (30) est reliée à une commande (32) par le biais de laquelle la vanne à plusieurs voies (24) est commandée.

5. Dispositif selon la revendication 4, **caractérisé par le fait que** ladite commande (32) entraîne un mécanisme d'entraînement (34) commandant la vanne à plusieurs voies (24).
